Europäisches Patentamt

European Patent Office

Office européen des brevets

(11) Publication number: **0 514 910 A1**

## EUROPEAN PATENT APPLICATION

(21) Application number: **92108629.4**

(22) Date of filing: **21.05.92**

(51) Int. Cl.⁵: **C08L 21/00**, //B60C15/00, (C08L21/00,51:04)

(30) Priority: **24.05.91 US 705377**

(43) Date of publication of application: **25.11.92 Bulletin 92/48**

(84) Designated Contracting States: **DE FR GB IT**

(71) Applicant: **PIRELLI ARMSTRONG TIRE CORPORATION 500 Sargent Drive New Haven, Connecticut 06536(US)**

(72) Inventor: **Scriver, Richard M. 16 Town Crier Madison, Connecticut 06443(US)**

(74) Representative: **von Füner, Alexander, Dr. et al Patentanwälte v. Füner, Ebbinghaus, Finck Mariahilfplatz 2 & 3 W-8000 München 90(DE)**

(54) **Tire bead rubber.**

(57) An improved blend of alkyl methacrylate-grafted natural rubber and synthetic rubber suitable for use in a tire apex or bead composition is disclosed. The rubber of this invention allows for a stiffer bead bundle and tire bead shape stability without precuring. A method of employing the rubber in a tire bead and apex is also disclosed.

EP 0 514 910 A1

This invention relates to an improved alkyl methacrylate grafted natural rubber and synthetic rubber blend suitable for use as the rubber component in tire apex or bead compositions and other industrial products comprising a stiff rubber.

Broadly speaking, a pneumatic tire consists of the tread area and the casing, which are composites of several components, each serving a specific purpose, yet all functioning together to produce the desired performance. Tire components comprise natural or synthetic rubbers, cross-linking materials, chemicals such as antioxidants and processing aids, fillers, and cords. These materials are selected and assembled into the tire structure to provide a broad range of mechanical and chemical properties.

In the casing, the semirigid base of the tire in contact with the rim is called the bead. The bead usually consists of multiple strands of high tensile, brass-plated steel coated with a rubber matrix, forming an inextensible hoop slightly larger than the rim. The bead provides a seal against the rim to prevent air leakage, an anchor point for the plies, and a load transfer mechanism between the loaded tire and the rim.

Above the bead in the lower sidewall region of many tires is a rubber wedge called the apex. The apex is bonded to and encased by the plies and provides rigidity to the lower sidewall for bending durability and lateral stiffness.

In the manufacture of a tire, the components are generally assembled inside out. After the liner and plies are positioned, the beads are affixed to the ends of the plies near the tire rims, the apex is wrapped over the bead, and the plies are turned up and back to wrap around the bead construction. In some manufacturing processes, the bead wire is encapsulated with rubber and precured prior to assembly so that the geometry and structural integrity of the bead are retained throughout the subsequent manufacturing steps. In these cases, after the bead is precured, it is often dipped in cement to provide enough tack to attach to the green bead filler and to adhere to the surrounding rubber. The remaining casing and tread components are added to the assembly, and the tire is cured.

A number of special rubber compositions have been suggested as components of the bead and associated sidewall regions of a tire. These compositions are formulated for dynamic stiffness, flex fatigue, tear strength, adhesion, and durability. In U.S. Pat. No. 4,067,373, for example, Delobelle and Madec disclosed a tire construction employing a rubber composition containing 50 to 90 parts carbon black and 20 to 50 parts polyethylene or polypropylene having a molecular weight of at least 500,000 for 100 parts by weight of natural or synthetic elastomer. The mixture has a high modulus of elasticity at small deformations (i.e., at least about 200 kg/cm$^2$) and relatively weak hysteresis (i.e., a loss angle in the order of from about 7° to 13°).

In U.S. Pat. No. 4,824,899, Yasuda disclosed a bead filler composition comprising 50 to 100 parts by weight of reinforcing carbon black, 1 to 10 parts by weight of sulfur, and 1 to 15 parts by weight of a metal salt of acrylic acid, based on 100 parts by weight of natural rubber, or a blend of natural rubber and not more than 50% synthetic diene rubber. The metal salts include aluminum acrylate, zinc acrylate, nickel acrylate, cobalt acrylate, lead acrylate, iron acrylate, manganese acrylate, barium acrylate, calcium acrylate, and magnesium acrylate. The three-component formulation is said to have high elastic modulus and improved fatigue resistance and processability.

Another three-component composition said to be easily processed was disclosed in U.S. Pat. No. 4,898,223 to Botzman and Landers. Their rubber composition consisted of a sulfur cured blend of polyoctenamer rubber, alkyl methacrylate grafted *cis*-1,4-polyisoprene rubber, and at least one additional sulfur curable rubber selected from natural rubber and synthetic rubbers containing carbon-to-carbon double bonds. The polyoctenamer rubber is described as a metathesis polymer of cyclooctene with prevalently *trans*-isomeric carbon-to-carbon double bonds. The polyoctenamer is said to enable the preparation of a relatively low viscosity rubber mixture having a high degree of processability yet which will cure to form a stiff rubber.

It is an object of the invention to provide a polymer blend suitable for use as rubber in a tire apex or bead composition. It is another object of the invention to provide an improved blend of alkyl methacrylate-grafted natural rubber and synthetic rubber that allows for tire bead shape stability without precuring. It is a further object of the invention to provide a method for making bead compositions using alkyl methacrylate-grafted natural rubber and synthetic rubber.

These and other objects are achieved by the present invention, which describes a rubber suitable for use in a tire apex or bead composition. The rubber of this invention is a blend of 5 to 35 weight percent alkyl methacrylate-grafted natural rubber and 95 to 65 weight percent synthetic rubber, more preferably 15 to 25 weight percent alkyl methacrylate-grafted natural rubber and 85 to 75 weight percent synthetic rubber, wherein the rubber contains no greater than 5 weight percent polyoctenemer rubber. An especially preferred embodiment employs about 20% methyl methacrylate-grafted natural rubber and about 80% styrene/butadiene synthetic rubber, and contains essentially no polyoctenamer rubber. A method of

2

employing the tire bead rubber in a pneumatic tire bead or apex by coating a bead wire with a rubber matrix comprising the rubber of this invention and using the tire bead or apex so produced without precuring, thus improving the production of pneumatic tires by eliminating at least one processing step, is also disclosed.

Figure 1 is a schematic cross-sectional view of a tire employing the alkyl methacrylate-grafted natural rubber and synthetic rubber blend of this invention in the apex and bead matrix portion of the tire.

Figures 2A and 2B show an enlarged view of two schematic tire rim cross-sections and illustrates a comparison between a tire bead employing the rubber of this invention (Figure 2A) and an otherwise identical tire bead except that a softer bead matrix rubber is employed (Figure 2B), resulting in a less stiff bead bundle.

In the practice of this invention, alkyl methacrylate-grafted natural rubber and synthetic rubber are blended for use as an elastomer in a composition suitable for use in the bead, apex, or associated sidewall regions of a pneumatic tire. A bead wire encased in a matrix comprising the rubber of this invention retains bead geometry without precuring.

An alkyl methacrylate-natural rubber graft polymer is employed as a component of the rubber of this invention. By the term "alkyl methacrylate-natural rubber graft polymer" is meant a graft polymer comprised of an alkyl methacrylate, preferably methyl methacrylate or another readily available commercially, grafted to natural rubber. The mole ratio of acrylate to rubber in the graft polymer commonly ranges between 0.25 to 1 and 1.5 to 1, more preferably 0.75 to 1 and 1.25 to 1. A preferred graft polymer has an acrylate to natural rubber range of about 1 to 1. An example of a suitable methyl methacrylated grafted natural rubber is 49% methacrylated natural rubber called MG 49 obtained commercially.

By the term "natural rubber" is meant rubber obtained from natural sources, or its chemical equivalent, such as *cis*-1,4-polyisoprene.

By the term "synthetic rubber" is meant any rubber produced synthetically such as polybutadiene, vinyl polybutadiene, polyisoprene, styrene/butadiene co-polymers (hereinafter referred to as SBR), styrene/isoprene/butadiene terpolymers, butadiene/ acrylonitrile copolymers, isoprene/acrylonitrile copolymers, ethylene/propylene/diene, butyl rubber, polyoctenamer rubber, and the like. As used herein, synthetic rubber includes blends of natural rubber and rubbers produced synthetically, and copolymers of natural rubber and synthetic rubber. In one embodiment, styrene/butadiene is employed as the synthetic rubber component.

In the practice of this invention, 5 to 35 weight percent alkyl methacrylate-grafted natural rubber and 95 to 65 weight percent synthetic rubber, more preferably 15 to 25% weight percent alkyl methacrylate-grafted natural rubber and 85 to 75 weight percent synthetic rubber, are blended together. A blend of 20 weight percent alkyl methacrylate-grafted natural rubber and 80% weight percent synthetic rubber is especially preferred.

The rubber of this invention contains no greater than 5 weight percent polyoctenamer rubber. By "polyoctenamer rubber" is meant *trans*-polyoctenylene, a metathesis polymer of cyclooctene with prevalently *trans*-isomeric carbon to carbon double bonds. In a preferred embodiment of the invention, essentially no polyoctenamer rubber is employed.

The rubber of this invention is employed as the elastomer component of rubber compositions. The rubber is blended with conventional tire ingredients and additives known to those skilled in the art such as processing aids, accelerators, cross-linking and curing agents, antioxidants, antiozonants, fillers and the like to make tire bead matrix or apex compositions. Processing aids include, but are not limited to, plasticizers, tackifiers, extenders, chemical conditioners, homogenizing agents and peptizers such as mercaptans, petroleum and vulcanized vegetable oils, resins, rosins, and the like. Accelerators include amines, guanidines, thioureas, thiazoles, thiurams, sulfenamides, thiocarbamates, xanthates, and the like. Cross-linking and curing agents include sulfur, zinc, oxide, and fatty acids. Fillers include carbon black and mineral fillers such as clay or silica. Example formulations are set forth hereinafter.

The materials are mixed by conventional means known to those skilled in the art, in a single step or in stages. For example, the rubber of this invention can be processed in one step. Alternatively, the rubber can be processed in two stages, first adding processing oils, fillers, cure activators, and tackifiers and blending with the rubber before adding cross-linking agents and accelerators in a second stage. Alternatively, the rubber can be processed in several steps, first mixing rubber, processing oil, fillers, cure activators, then adding additional filler and processing oil incrementally in two or three steps, and finally adding accelerators and cross-linking agents. Example processing stages are also illustrated hereinafter.

The rubber matrix composition so formed is hard and stiff, has high viscosity and high flow resistance. Though there is some variation in the test method, the DuPont Spider Mold Flow at 193°C, 380°F preferably ranges between about 11 and about 13%, more preferably about 11.2 to about 12%. A most preferred embodiment has a spider mold flow at 193°C of about 11.5%. The Mooney viscosity (determined according to ASTM 3346) preferably ranges between 95 and 120 ML 4' @ 100°C, more narrowly 100 to 115 ML 4' @ 100°C. A most preferred embodiment has a Mooney viscosity of about 110 ML 4' @ 100°C. Other physical properties of example compositions are set out hereinafter.

In one embodiment, the rubber composition is employed as a bead matrix in the production of a pneumatic tire. A tire bead wire is first encased in a matrix comprising the rubber of this invention. By "bead wire" is meant a single wire, multiple wire strands or bundles, either twisted or straight, wire braid or cording, and the like. The tire bead so formed is installed without precuring into the sidewall portion of a green tire positioned near the rim and proximal to the tire apex in a conventional manufacture of tire components known to those skilled in the art. An alternate embodiment employs the rubber of this invention in the apex. Another embodiment employs the rubber in both the bead and the apex. After the remaining casing and tread components are assembled, the tire is cured for such time and under such conditions that vulcanization occurs.

An advantage of the present invention is the fabrication of a stiff bead bundle without precuring. In the production of a pneumatic tire, the tire bead wire is generally encased in a rubber matrix and precured to retain the geometry of the bead. Because a bead matrix comprising the rubber of this invention retains the geometry of the bead without precuring, the precuring step is eliminated. Moreover, precured beads are often dipped in cement to provide enough tack to attach to the green bead filler when assembled with the other tire components. This invention eliminates the cementing step. The undipped, green bead is installed with other carcass components prior to vulcanization of the assembled tire.

Another advantage of the present invention is the stiffness of the bead bundle or apex of tires employing alkyl methacrylate-grafted natural rubber/synthetic rubber elastomers. The stiff rubber in the sidewall aids in resisting lateral forces during vehicular cornering, curb bumping, and the like.

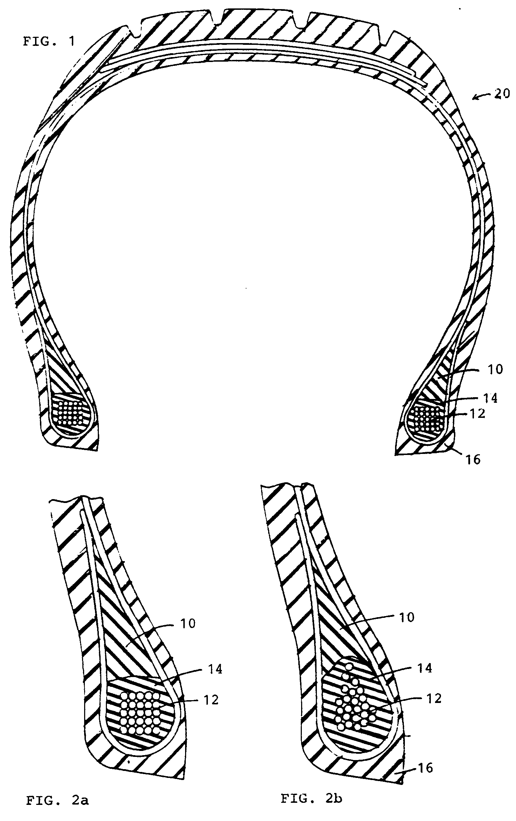

For further understanding of the invention, reference is made to the accompanying Figures. Figure 1 depicts a cross-sectional view of a tire 20 and illustrates apex component 10, bead wire 12 (comprising a bundle of twenty-five strands), and bead matrix 14 near rim portion 16 of an uncured tire. Figures 2A and 2B depict two enlargements of bead regions after curing. Both bead regions were constructed using the same bead wire, tire construction, and processing conditions; the only difference between them is the rubber employed in bead matrix region 14. Figure 2A employs the bead rubber of this invention. Neither tire bead was precured. Note that in the Figure 2A bead, the square geometry of bead wire 12 is held in place by the bead matrix 14 comprising a rubber of this invention. In the Figure 2B bead, the geometry is not retained. The bead strands making up bead wire 12 have lost their 5 by 5 strand configuration, and they have migrated away from rim portion 16 toward apex 10. The resulting bead bundle in Figure 2A is stiffer than that in Figure 2B.

## EXAMPLES

The following examples are presented to further illustrate and explain the present invention and should not be taken as limiting in any regard. Unless otherwise indicated, all parts and percentages are by weight, and are based on the weight at the particular stage of the processing being described.

### Example 1

Rubber compositions suitable for use in a tire bead matrix are prepared by mixing the appropriate ingredients in a suitable and conventional rubber mixing apparatus which is comprised of the recipes shown in the following Table I for rubber compounds identified herein as A, B, C, and D.

As summarized in the Table, composition A is a control rubber comprising essentially no alkyl methacrylate-grafted natural rubber. Composition C comprises a rubber of this invention having 20 weight percent methyl methacrylate-grafted natural rubber and 80 weight percent synthetic rubber. For comparison, compositions B and D comprise rubbers having alkyl methacrylate-grafted natural rubber ranges below and above preferred embodiments of this invention. Composition B comprises 10 weight percent methyl methacrylate-grafted natural rubber, 10 weight percent natural rubber, and 80 weight percent synthetic rubber. D comprises 30 weight percent methyl methacrylate-grafted natural rubber and 70 percent synthetic rubber.

EP 0 514 910 A1

TABLE I

| Material | Composition, parts | | | |
|---|---|---|---|---|
| | A | B | C | D |
| Natural Rubber | 20 | 10 | 0 | 0 |
| Styrene/Butadiene Rubber | 80 | 80 | 80 | 70 |
| Methylmethacrylate/NR[1] | 0 | 10 | 20 | 30 |
| Filler[2] | 140 | 140 | 140 | 140 |
| Processing Oil | 24 | 24 | 24 | 24 |
| Zinc Oxide | 5 | 5 | 5 | 5 |
| Fatty Acid | 3 | 3 | 3 | 3 |
| Accelerators | 1.85 | 1.85 | 1.85 | 1.85 |
| Sulfur | 4 | 4 | 4 | 4 |
| Other[3] | 3 | 3 | 3 | 3 |

[1]49% Methacrylated grafted natural rubber
[2]Carbon black and/or silica
[3]Tackifiers, peptizers, resins

Example 2

In this example, the physical properties of the rubber compositions of Example 1 are compared and contrasted. The values are presented in Table II below.

TABLE II

| | Composition | | | |
|---|---|---|---|---|
| Physical Property | A | B | C | D |
| | | | | |
| *Mooney Viscosity (ASTM D3646)* | | | | |
| ML 4' @ 100°C | 92 | 99 | 111 | 127 |
| | | | | |
| *Mooney Scorch @ 135°C (ASTM D1546)* | | | | |
| 2 pt. rise | 6 | 7 | 7 | 7 |
| 10 pt. rise | 8 | 9 | 8 | 8 |
| | | | | |
| *Specific Gravity (ASTM D297)* | | | | |
| | 1.290 | 1.297 | 1.302 | 1.308 |
| | | | | |
| *Shore A Durometer (ASTM D2240)* | | | | |
| 15, 30' @ 148°C | 84/87 | 87/88 | 88/88 | 90/92 |
| | | | | |
| *Unaged Stress/Strain (ASTM D412)* | | | | |
| M 100% 15' @ 148°C | 9.09 | 9.12 | 9.07 | |

5

*Unaged Stress/Strain*

| Tensile 15', MPa | 11.5 | 11.3 | 10.8 | 10.3 |
| 30', MPa | 11.2 | 11.3 | 10.7 | 11.0 |

*Green Strength, Instron*

| lbsf @ peak | 125.5 | 152.1 | 194.7 | 223.9 |

*Tel-tak (8 oz, 30 sec)*

| To self, unexposed | 13 | 9 | 9 | 6 |
| exposed 1 day | 8 | 9 | 9 | 5 |
| exposed 4 days | 9 | 10 | 9 | 4 |

*Bead Wire Adhesion*

| Unaged, $lb/in^2$ | 176 | 194 | 217 | 230 |

*DuPont Spider Mold Flow @ 193°C, 1500 lbs. pressure*

| Sample Weight (g) | 45.0 | 45.0 | 45.0 | 45.0 |
| Spider Weight (g) | 7.1 | 6.1 | 5.2 | 4.8 |
| % Mold Flow | 15.7% | 13.6% | 11.6% | 10.7% |

Example 3

This example illustrates two processing sequences that can be employed to prepare rubber compositions using the rubber of this invention in conventional mixing equipment.

The first is a two-stage processing sequence. Eighty parts styrene-butadiene rubber and 20 parts 49% methyl methacrylate-grafted natural rubber are mixed with 140 parts filler, 22 parts processing oil, 5 parts cure activator, 3 parts tackifier, and 2.3 parts adjuvants are processed together in stage 1. In stage 2, 9.85 parts curing agents and tackifiers are added to yield a final product having the desired physical properties.

The second sequence is a five-stage processing sequence. Eighty parts styrene-butadiene rubber and 20 parts 49% methyl methacrylate-grafted natural rubber are processed with 6 parts processing oil, 45 parts filler, 5 parts zinc oxide, and 3 parts fatty acid in stage one. This mixture is further processed with an additional 30 parts filler and 6 parts processing oil in stage 2; an additional 30 parts filler and 7.3 parts oil and resin in stage 3; and 35 parts filler, 5 parts processing oil, and 3 parts tackifier resin in stage 4. In stage 5, 9.85 parts curing agents and tackifiers are added and the mixture to yield a final product having the desired physical properties.

The above description is for the purpose of teaching the person of ordinary skill in the art how to practice the present invention, and it is not intended to detail all those obvious modifications and variations of it which will become apparent to the skilled worker upon reading the description. It is intended, however, that all such obvious modifications and variations be included within the scope of the present invention, which is defined by the following claims.

**Claims**

1. A rubber comprising 5 to 35 weight percent alkyl methacrylate-grafted natural rubber and 95 to 65 weight percent synthetic rubber, wherein said rubber contains no greater than 5 weight percent polyoctenamer rubber.

2. A rubber according to claim 1 comprising 15 to 25 weight percent alkyl methacrylate-grafted natural rubber and 85 to 75 weight percent synthetic rubber.

6

EP 0 514 910 A1

3. A rubber according to claim 2 comprising about 20 weight percent alkyl methacrylate-grafted natural rubber and about 80 weight percent synthetic rubber.

4. A rubber according to claim 1 wherein the alkyl methacrylate-grafted natural rubber is methyl methacrylate-grafted rubber.

5. A rubber according to claim 4 wherein the methyl methacrylate-grafted natural rubber has an acrylate to natural rubber mole ratio ranging between 0.25 to 1 and 1.5 to 1.

6. A rubber according to claim 5 wherein the mole ratio ranges between 0.75 to 1 and 1.25 to 1.

7. A rubber according to claim 6 wherein the mole ratio is about 1 to 1.

8. A rubber according to claim 1 wherein said synthetic rubber is selected from the group consisting of polybutadiene, vinyl polybutadiene, polyisoprene, styrene/butadiene co-polymers, styrene/isoprene/ butadiene terpolymers, butadiene/acrylonitrile copolymers, isoprene/acrylonitrile copolymers, ethylene/propylene/diene, butyl rubber, and mixtures and polymers thereof with natural rubber.

9. A rubber according to claim 8 wherein said synthetic rubber is styrene/butadiene.

10. A rubber according to claim 1 wherein said synthetic rubber comprises essentially no polyoctenamer rubber.

11. A rubber composition comprising, as the elastomer component, the rubber according to claim 1.

12. A tire bead comprising, as the rubber matrix, a rubber blend of 5 to 35 weight percent alkyl methacrylate-grafted natural rubber and 95 to 65 weight percent synthetic rubber, wherein said rubber blend contains no greater than 5 weight percent polyoctenamer rubber.

13. A tire bead according to claim 12 wherein said rubber blend contains 15 to 25 weight percent alkyl methacrylate-grafted natural rubber and 85 to 75 weight percent synthetic rubber.

14. A tire bead according to claim 12 wherein said rubber matrix has a spider mold flow at 193°C that ranges between about 11 and about 13%.

15. A tire bead according to claim 12 containing essentially no polyoctenamer rubber.

16. A tire bead according to claim 15 comprising about 20 weight percent methyl methacrylate-grafted natural rubber and about 80 percent synthetic rubber.

17. A tire bead according to claim 16 wherein said methyl methacrylate-grafted natural rubber has an acrylate to natural rubber mole ratio ranging between 0.75 to 1 and 1.5 to 1 and said synethtic rubber is a styrene-butadiene copolymer.

18. In a method for producing a pneumatic tire which comprises fabricating a tire bead by encasing a tire bead wire in a rubber matrix; installing the tire bead into a sidewall portion of the tire near the rim proximal to the tire apex; and assembling the remaining casing and tread components prior to curing, an improvement wherein said rubber matrix of said tire bead comprises a rubber comprising 5 to 35 weight percent alkyl methacrylate-grafted natural rubber and 95 to 65 weight percent synthetic rubber, and containing no greater than 5 weight percent polyoctenamer rubber, without precuring of said tire bead.

19. An improvement according to claim 18 wherein said rubber matrix of said tire bead comprises 15 to 25 weight percent alkyl methacrylate-grafted natural rubber and 85 to 75 weight percent synthetic rubber.

20. An improvement according to claim 19 wherein said alkyl methacrylate-grafted natural rubber is methyl methacrylate-grafted rubber having an acrylate to natural rubber mole ratio ranging between 0.25 to 1 and 1.5 to 1.

7

21. An improvement according to claim 18 wherein said rubber matrix has a spider mold flow at 193°C ranging between about 11 and about 13%.

22. An improvement according to claim 18 wherein said synthetic rubber is selected from the group consisting of polybutadiene, vinyl polybutadiene, polyisoprene, styrene/butadiene co-polymers, styrene/isoprene/butadiene terpolymers, butadiene/acrylonitrile copolymers, and isoprene/acrylonitrile copolymers, ethylene/propylene/diene, butyl rubber, and mixtures and polymers thereof with natural rubber, and contains essentially no polyoctenamer rubber.

23. An improvement according to claim 22 wherein said synthetic rubber comprises styrene/butadiene co-polymers.

24. An improvement according to claim 18 wherein said tire bead is installed in the tire without dipping into a cement.

FIG. 1

FIG. 2a

FIG. 2b

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 351 054 (SUMITOMO RUBBER IND KK)<br>* table 1 *<br>* page 3, line 11 - line 13; claims 7,9 *<br>--- | 1-11 | C08L21/00<br>//(C08L21/00,<br>51:04)<br>B60C15/00 |
| X | CHEMICAL ABSTRACTS, vol. 89, no. 18,<br>30 October 1978, Columbus, Ohio, US;<br>abstract no. 147893Q,<br>M.A. WHEELANS: 'Hard flexible materials based on blends of natural rubber with Heveaplus MG 49'<br>* abstract *<br>& IND. GOMMA<br>vol. 22, no. 4, 1978,<br>pages 51 - 54;<br>--- | 1-11 | |
| A | EP-A-0 381 611 (GOODYEAR TIRE & RUBBER CO.)<br><br>* abstract; claim 5; figure 1 *<br>* page 3, line 4 - line 7 *<br>* page 5; table 1 * | 12,13,<br>15-17 | |
| | ----- | | **TECHNICAL FIELDS SEARCHED (Int. Cl.5 )**<br><br>C08L |

The present search report has been drawn up for all claims

| Place of search | Date of completion of the search | Examiner |
|---|---|---|
| THE HAGUE | 07 AUGUST 1992 | METTLER R.M. |

EPO FORM 1503 03.82 (P0401)